# EUROPÄISCHE PATENTSCHRIFT

(11) **EP 0 468 157 B1**
(45) Veröffentlichungstag und Bekanntmachung des Hinweises auf die Patenterteilung: **01.12.1993**
(21) Anmeldenummer: 91107915.0
(22) Anmeldetag: 16.05.1991
(51) Int. Cl.: B23B 31/12

(54) **Bohrfutter**
Drill chuck
Mandrin de perceuse

(30) Priorität: 21.07.1990 DE 4023303
(43) Veröffentlichungstag der Anmeldung: 29.01.1992
(73) Patentinhaber: Röhm, Günter Horst, D-89567 Sontheim (DE)
(72) Erfinder: Röhm, Günter Horst, D-89567 Sontheim (DE)
(74) Vertreter: Fay, Hermann, Dipl.-Phys. Dr.

(56) Entgegenhaltungen:
- EP-A- 188 354
- EP-A- 340 310
- DE-C- 3 406 668
- US-A- 2 684 856

## Beschreibung

Die Erfindung betrifft ein Bohrfutter mit zwischen sich eine Aufnahme für das Bohrwerkzeug bildenden Spannbacken, mit einem Futterkörper, in dem die Spannbacken verteilt um die Drehachse in Führungsbohrungen angeordnet sind, die in zur Drehachse geneigter Richtung verlaufen, so daß die Führungsbohrungen mit ihren Achsen nach vorn, d. h. zum Bohrwerkzeug hin, zusammenlaufen und rückwärts in Öffnungen an der Mantelfläche des Futterkörpers austreten, ferner mit einem zur Drehachse koaxialen, drehbar und axial unverschiebbar am Futterkörper gelagerten Stellring, der zum Verstellen der Spannbacken ein mit der Drehachse koaxiales Stellgewinde aufweist, das an jeder Spannbacke mit einer an der Spannbacke vorgesehenen Zahnreihe im Eingriff steht, und mit einem am Futterkörper geführten, gegen den Stellring austellbaren Sperrglied, das in seiner am Stellring angreifenden Stellung diesen gegen unerwünschte Verdrehung sichert.

Bei einem beispielsweise aus der DE-C- 34 06 668 bekannten Bohrfutter dieser Art ist das in Form einer Sperrhülse ausgebildete Sperrglied axial hinter dem Stellring, d. h. auf der der Bohrspindel zugewandten Seite des Stellrings, am Futterkörper angeordnet, was eine dafür ausreichende rückwärtige Länge des Futterkörpers erfordert und im Ergebnis zu entsprechend großer Baulänge des Bohrfutters insgesamt führt.

Der Erfindung liegt die Aufgabe zugrunde, ein Bohrfutter der eingangs genannten Art so auszubilden, daß eine geringe axiale Baulänge verwirklicht werden kann.

Diese Aufgabe wird nach der Erfindung dadurch gelöst, daß das Sperrglied axial vor dem Stellgewinde des Stellrings angeordnet und der Stellring axial nach vorn über das Stellgewinde hinaus verlängert und dort mit einer zum Futterkörper hin offenen Ringnut versehen ist, die das Sperrglied aufnimmt.

Bei der Erfindung wird der Umstand genutzt, daß bei Bohrfuttern der eingangs genannten Art der Futterkörper entsprechend der maximalen Hublänge der Spannbacken axial nach vorn über das Stellgewinde hinaus vorstehen muß, damit die Spannbackenführung auch bei kleinen Spanndurchmessern ausreichend gewährleistet ist. Dieser über das Stellgewinde vorstehende Teil des Futterkörpers trägt erfindungsgemäß das Sperrglied, das an dem dazu ebenfalls über das Stellgewinde hinaus nach vorn axial verlängerten Stellring angreift, der das Sperrglied in der Ringnut aufnimmt und das Sperrglied nach außen abdeckt.

Das Sperrglied kann auf verschiedene Weise ausgebildet sein. Vorzugsweise ist das Sperrglied ein zur Drehachse koaxialer Sperring, der am Futterkörper undrehbar und axial verschiebbar geführt und durch die Kraft von Federn in seiner am Stellring angreifenden Stellung gehalten ist. Dabei ist die axiale Breite der Ringnut im Stellring genügend groß, so daß sich der Sperring in der Ringnut ausreichend zwischen der den Stellring sichernden Stellung und der den Stellring zum Verdrehen freigebenden Stellung verschieben kann.

Die Sicherung des Stellrings durch den Sperring kann ebenfalls auf verschiedene Weise erfolgen. Eine sehr zweckmäßige Möglichkeit ist dadurch gekennzeichnet, daß der Stellring in der Wandung der Ringnut einerseits und der Sperring andererseits jeweils mit einer Bremsringfläche versehen sind, und daß in der am Stellring angreifenden Stellung der Sperring und der Stellring durch die Federn mit den Bremsringflächen aneinander gedrückt sind. Die Sicherung des Stellrings kann dann allein durch den Reibungsschluß zwischen den Bremsringflächen stattfinden, wobei die Bremskraft dadurch erhöht werden kann, daß die Bremsringflächen eine zwischen sich hohe Reibung erzeugende Oberflächenbeschaffenheit aufweisen und/oder konisch zur Drehachse ausgebildet sind, um die Flächenpressung an den Bremsringflächen zu vergrößern. - Eine bevorzugte andere Möglichkeit zur Sicherung des Stellrings durch den Sperring ist dadurch gekennzeichnet, daß der Stellring in der Wandung seiner Ringnut mindestens eine Sperrausnehmung aufweist, in die der Sperring in seiner am Stellring angreifenden Stellung mit einem Sperrvorsprung eingreift. Dabei empfiehlt es sich, die Anordnung im einzelnen so zu treffen, daß der Sperrvorsprung und die ihn aufnehmende Sperrausnehmung einander in derart geneigten Flankenflächen anliegen, daß diese beim Verdrehen des Stellrings von Hand den Sperrvorsprung gegen die Kraft der Federn aus der Sperrausnehmung herausdrücken, im übrigen aber den Stellring gegen Verdrehen blockieren. Die Sicherung des Stellrings durch den Sperring löst sich dann selbsttätig, wenn ein dazu ausreichend großes Drehmoment von Hand auf den Stellring ausgeübt wird. Zweckmäßigerweise sind mehrere Sperrvorsprünge und Sperrausnehmungen vorgesehen und gleichmäßig verteilt über den Futterumfang nach Art von Zahnkränzen angeordnet.

Es besteht aber auch die Möglichkeit, die Sicherung des Stellrings durch den Sperring so auszubilden, daß der Sperring aus seinem Angriff der Stellring zunächst von Hand gelöst werden muß, um den Stellring überhaupt verdrehen zu können. Eine für diese Betätigung des Sperrings bevorzugte Ausführungsform ist dadurch gekennzeichnet, daß der Sperring an seiner dem Stellring zugekehrten radialen Außenfläche eine in Umfangsrichtung verlaufende Ringnut aufweist, in die ein Stellstift in Nutlängsrichtung verschieblich eingreift, der in axialer Richtung des Bohrfutters verstellbar in der Wand des Stellrings geführt ist und nach außen aus dem Stellring vorsteht. Durch entsprechende Betätigung des die Drehung des Stellrings gegenüber dem Sperring nicht behindernden Stellstiftes kann der Sperring in gewünschter Weise so verschoben werden, daß er am Stellring nicht zum Angriff kommt, seine Sicherungsfunktion also aufgehoben ist. Dabei kann der Stellstift gegen Verstellung in seiner eigenen Axialrichtung im Sperring oder Stellring gesichert sein. Vorzugsweise ist in der Wand des Stellrings ein Durchbruch vorgesehen, in dem der Stellstift in Umfangsrichtung begrenzt zwischen zwei Endstellungen verschiebbar ist, wobei der Sperring in der ersten Endstellung für den Angriff am Stellring freigegeben und in der zweiten Endstellung gesperrt ist. Im übrigen empfiehlt es sich, die Anordnung so zu treffen, daß der Stellstift in der ersten Endstellung um denzum Lösen des Sperrings vom Stellring erforderlichen Axialhub des Sperrings frei im Durchbruch verschiebbar ist und in der zweiten Endstellung unter der Kraft der Federn in einer Rastausnehmung in der Randkontur des Durchbruchs sitzt.

In konstruktiver Hinsicht ist eine sehr vorteilhafte Ausführungsform dadurch gekennzeichnet, daß der Sperring eine sich axial erstreckende, zum Futterkörper hin und am rückwärtigen Sperringende offene Axialnut aufweist, in die ein am Futterkörper fester und den Sperring gegen Verdrehen sichernder Bolzenkopf greift. Dann kann der Sperring bei der Montage des Bohrfutters axial von vorne her auf den Futterkörper aufgeschoben werden, wobei der Bolzenkopf in die Axialnut eintritt. Weiter empfiehlt es sich aus montagetechnischen Gründen, daß der Stellring aus einer Stellhülse und einem das Stellgewinde tragenden Gewindering besteht, die gegeneinander undrehbar axial zusammengesteckt sind, wobei die Ringnut in der Stellhülse zum Gewindering hin axial offen ausgebildet ist, so daß der Sperring bei zunächst noch fehlendem Gewindering axial in die Ringnut eingelegt werden kann. Dann kann im übrigen auch der Stellring mit einstückig ausgebildetem Gewindering und mit in die Ringnut eingelegtem einstückigem Sperring bei der Montage von vorne auf den Futterkörper aufgeschoben und am vorderen Ende durch beispielsweise einen Federring oder dergl. in seiner axialen Stellung auf dem Futterkörper gesichert werden.

Der Sperring kann am vorderen Ringende offene Sacklöcher aufweisen, welche je eine der als Schraubenfedern ausgebildeten Federn aufnehmen, die mit ihrem aus dem Sackloch vorstehenden Federende an einer zur Drehachse senkrecht stehenden Ringfläche in der Wandung der Ringnut des Stellrings abgestützt sind. Weiter besteht die Möglichkeit, daß der Stellring zum vorderen Ende hin konisch verjüngt ist, so daß seine axiale Verlängerung über das Spanngewinde hinaus beim Bohrvorgang nicht hinderlich ist und die Sicht auf die Spannbacken und das Bohrwerkzeug beim Bohrvorgang nicht beeinträchtigt.

Im folgenden wird die Erfindung an in der Zeichnung dargestellten Ausführungsbeispielen näher erläutert; es zeigt:
- Fig. 1: ein Bohrfutter nach der Erfindung, teils im Axialschnitt, teils in Seitenansicht,
- Fig. 2: eine andere Ausführungsform des erfindungsgemäßen Bohrfutters in einer der Fig. 1 entsprechenden Darstellung,
- Fig. 3: das in Fig. 2 mit III bezeichnete Detail in vergrößerter Darstellung.

In der Zeichnung ist der Futterkörper mit 1 und der Stellring mit 2 bezeichnet. Der Futterkörper 1 ist mittels einer Gewindeaufnahme 1' an eine nicht dargestellte Bohrspindel anschließbar. Die üblicherweise zu dritt über den Umfang des Bohrfutters verteilten und zwischen sich eine Aufnahme für das nicht dargestellte Bohrwerkzeug bildenden Spannbacken tragen die Bezugsziffer 3. Die im Futterkörper 1 vorgesehene Ausnehmung 11 zur Aufnahme des Bohrerschafts kann über einen axialen Durchgang 11' mit der Gewindeaufnahme 1' in Verbindung stehen, so daß Schlagbewegungen von der Bohrspindel unmittelbar auf das Ende des in der Aufnahme zwischen den Spannbacken 3 gehaltenen Bohrerschaftes übertragen werden können. Die Spannbacken 3 sind gleichmäßig um die Drehachse 4 des Bohrfutters im Futterkörper 1 in Führungsbohrungen 5 angeordnet, die in zur Drehachse 4 geeigneter Richtung verlaufen, so daß die Achsen der Führungsbohrungen 5 nach vorn, d. h. zum Bohrwerkzeug hin, zusammenlaufen. Der Stellring 2 ist koaxial zur Drehachse 4 am Futterkörper 1 angeordnet. Er ist drehbar und axial unverschiebbar am Futterkörper 1 gelagert und zum Verstellen der Spannbacken 3 in deren Führungsbohrungen 5 mit einem mit der Drehachse 4 koaxialen Stellgewinde 7 versehen. Dieses Stellgewinde 7 ist entsprechend der Neigung der Spannbacken 3 gegen die Drehachse 4 konisch ausgebildet und steht an jeder Spannbacke 3 mit einer an der Spannbacke vorgesehenen Zahnreihe 8 im Eingriff, so daß eine Drehung des Stellrings 2 ein Verschieben der Spannbacken 3 in den Führungsbohrungen 5 ergibt. Die Spannbacken 3 sind im wesentlichen kreiszylindrische Bolzen, die auf der dem Stellgewinde 7 zugewandten Seite abgeflacht und dort mit der Zahnreihe 8 ausgestattet sind. Die Führungsbohrungen 5 treten in Öffnungen 6 an der Mantelfläche des Futterkörpers 1 aus. Im Bereich dieser Öffnungen 6 besitzt der Stellring 2 einen Gewindering 2.1, an dem das Stellgewinde 7 ausgebildet ist. Weiter besitzt der Stellring 2 eine Stellhülse 2.2, die die Öffnungen 6 übergreift und abdeckt und zusammen mit dem Futterkörper 1 einen an die Öffnungen 6 anschließenden Ringraum 10 bildet, in den die Spannbacken 3 aus den Führungsbohrungen 5 und Öffnungen 6 bei großen Spanndurchmessern austreten können. Der Gewindering 2.1 und die Stellhülse 2.2 sind axial unverdrehbar ineinander gesteckt, wobei ein an der Stellhülse 2.2 vorgesehener Ringbund 14 den Stellring 2 in seiner axialen Lage fixiert und eine axial verlaufende Nut-Federausbildung 15 die Stellhülse 2.2 gegen Verdrehungen relativ zum Gewindering sichert. Der Gewindering 2.1 ist axial rückwärtig über ein Kugellager 12 und einen Stützring 12' am Futterkörper 1 abgestützt. Axial nach vorn ist der Stellring 2 in seiner axialen Lage durch einen Federring 16 gesichert, der in einen Ringnut des Futterkörpers 1 eingesetzt ist. Am rückwärtigen Ende trägt der Futterkörper 1 eine undrehbar mit ihm fest verbundene Griffhülse 13, an dem das Bohrfutter gehalten werden kann, wenn zum Lösen oder Spannen des Bohrwerkzeugs der Stellring 2 von Hand verdreht wird. Das Stellgewinde 7 ist dabei von genügend kleiner Steigung, um eine ausreichend feste Einspannung des Bohrwerkzeugs allein durch Betätigen des Stellrings 2 von Hand zu ermöglichen. Weiter ist ein am Futterkörper 1 gegen den Stellring 2 verstellbar geführter Sperring 17 vorgesehen, der in einer am Stellring 2 angreifenden Stellung diesen gegen unerwünschtes Verdrehen während des Bohrvorgangs sichert. Dieser Sperring 17 ist axial vor dem Stellgewinde 7 des Stellrings 2 angeordnet und am Futterkörper 1 undrehbar und axial verschiebbar geführt.

Der Stellring 2 ist axial nach vorn über das Stellgewinde 7 hinaus verlängert und an seinem verlängerten Ringteil 2' mit einer zum Futterkörper 1 hin offenen Ringnut 18 versehen, die den Sperring 17 aufnimmt, wobei die axiale Breite der Ringnut 18 groß genug ist, so daß sie die axiale Verschiebung des Sperrings 17 ausreichend ermöglicht. Der Sperring 17 ist durch die Kraft von Federn 19 in seiner am Stellring 2 angreifenden Stellung gehalten.

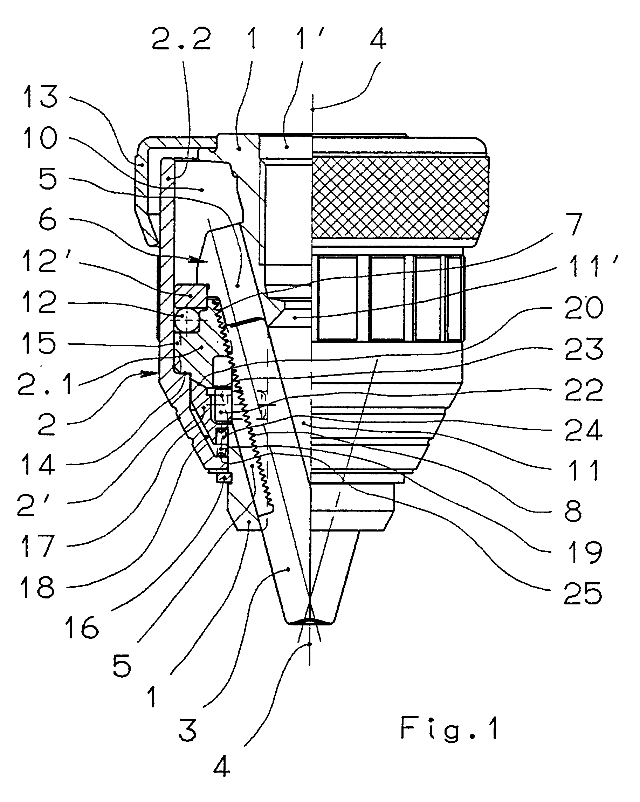

Im Ausführungsbeispiel nach Fig. 1 ist der Stellring 2 in der Wandung der Ringnut 18 einerseits und der Sperring 17 andererseits jeweils mit einer Bremsringfläche 20 versehen. Der Sperring 17 und der Stellring 2 sind durch die Federn 19 mit den Bremsringflächen 20 aneinander gedrückt, wobei die Bremsringflächen 20 konisch zur Drehachse 4 ausgebildet sind. Die Reibungskraft zwischen den Bremsringflächen 20 sichert den Stellring 2 gegen unerwünschtes Verdrehen während des Bohrvorgangs; sie ist jedoch nur so groß, daß sie beim Verdrehen des Stellrings 2 von Hand überwunden werden kann.

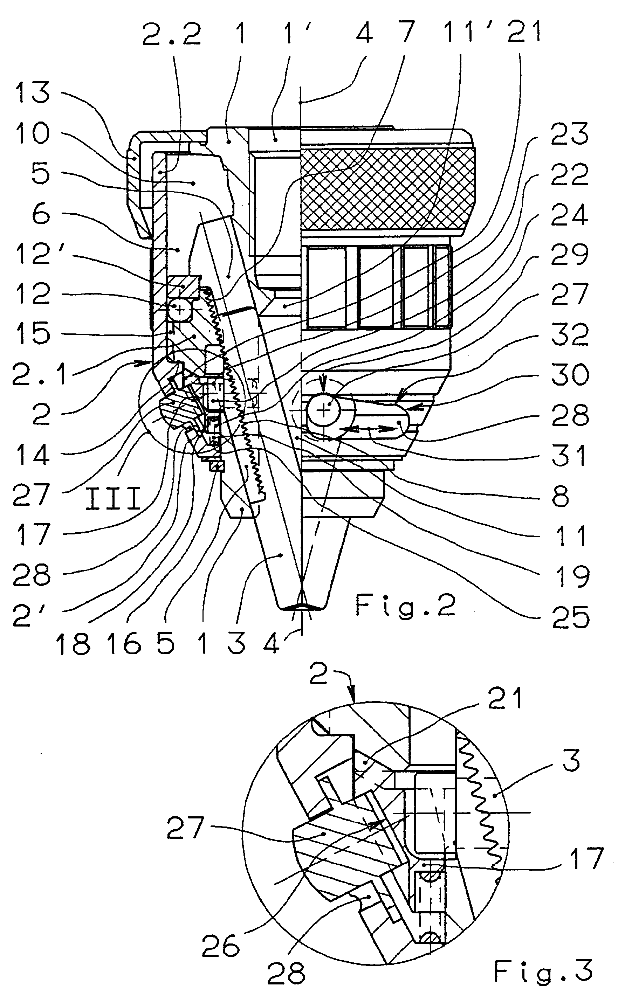

Im Ausführungsbeispiel nach Fig. 2 ist der Stellring 2 in der Wandung seiner Ringnut 18 mit Sperrausnehmungen versehen, in die der Sperring 17 in seiner am Stellring 2 angreifenden Stellung mit entsprechenden Sperrvorsprüngen eingreift. Diese Sperrausnehmungen und Sperrvorsprünge können nach Art je eines Zahnkranzes 21 am Stellring 2 bzw. Sperring 17 ausgebildet sein. Die Sperrvorsprünge und die sie aufnehmenden Sperrausnehmungen können einander in derart geneigten Flankenflächen anliegen, daß diese beim Verdrehen des Stellrings 2 von Hand zwar den Sperring 17 verschieben und dabei die Sperrvorsprünge gegen die Kraft der Federn 19 aus den Sperrausnehmungen herausdrücken, sonst aber den Stellring 2 gegen Verdrehen blockieren. Jedoch besteht hier wie auch im Ausführungsbeispiel nach Fig. 2 die Möglichkeit, die Sicherung des Stellrings 2 durch den Sperring 17 so auszubilden, daß der Sperring 17 aus seinem den Stellring 2 gegen Verdrehen sichernden Angriff am Stellring 2 zunächst von Hand gelöst werden muß, damit der Stellring 2 überhaupt verdreht werden kann. Eine für diese Betätigung des Sperrings 17 besonders geeignete Ausführungsform ist in den Fig. 2 und 3 dargestellt. Der Sperring 17 besitzt an seiner dem Stellring 2 zugekehrten, im Ausführungsbeispiel also konisch verlaufenden radialen Außenfläche eine in Umfangsrichtung verlaufende Ringnut 26. In diese Ringnut greift, in Nutlängsrichtung verschieblich, ein Stellstift 27 ein, der in im wesentlichen axialer Richtung des Bohrfutters verstellbar in der Wand des Stellrings 2 geführt ist und durch diese Wand hindurch nach außen aus dem Stellring 2 zu Betätigung von Hand hervorsteht. Der Stellstift 27 ist in seiner eigenen Axialrichtung im Stellring 2 gesichert. In der Wand des Stellrings 2 ist ein Durchbruch 28 vorgesehen, in dem der Stellstift 27 in Umfangsrichtung (Doppelpfeil 31) begrenzt zwischen zwei Endstellungen 29 und 30 verschiebbar ist. In der ersten Endstellung 29 ist der Sperring 17 für den Angriff am Stellring 2 freigegeben, während in der zweiten Endstellung 30 der Sperring 17 axial aus seinem Angriff am Stellring 2 gelöst ist, so daß der Stellring 2 frei verdreht werden kann. In der ersten Endstellung 29 kann der Stellstift 27 außerdem um den zum Lösen des Sperrings 17 vom Stellring 2 erforderlichen Axialhub des Sperrings 17 frei im Durchbruch 28 verschoben werden. Für die zweite Endstellung 30 ist in der Randkontur des Durchbruchs 28 eine Rastausnehmung 32 vorgesehen, in der der Stellstift 27 unter der Kraft der Federn 19 sitzt. Dadurch erübrigt es sich, beim Verdrehen des Stellrings 2 von Hand den Stellstift 27 eigens in der Endstellung 30 von Hand festhalten zu müssen. Der Stellring 2 kann also von Hand ohne weiteres verdreht werden, wenn der Stellstift 27 in der Endstellung 30 steht oder in der Endstellung 29 von Hand axial nach vorn in Richtung zum Bohrwerkzeug hin verschoben und festgehalten wird.

Im übrigen besitzt bei allen Ausführungsbeispielen der Sperring 17 eine sich axial erstreckende, zum Futterkörper 1 und am rückwärtigen Sperringende offene Axialnut 22, in die ein am Futterkörper 1 fester und den Sperring 17 gegen Verdrehen sichernder Bolzenkopf 23 greift. Die Stellhülse 2.2 und der Gewindering 2.1 sind axial zusammengesteckt, wobei die Ringnut 18 in der Stellhülse 2.2 zum Gewindering 2.1 hin axial offen ausgebildet ist, so daß der Sperring 17 bei zunächst noch fehlendem Gewindering 2.1 axial vom rückwärtigen Ende der Stellhülse 2.2 her in die Ringnut 18 eingelegt werden kann.

Der Sperring 17 ist mit axialen, am vorderen Ringende offenen Sacklöchern 24 versehen, welche je eine der als Schraubenfedern ausgebildeten Federn 19 aufnehmen. Mit ihrem aus dem Sackloch 24 vorstehenden Federende sind die Federn 19 an einer zur Drehachse 4 senkrecht stehenden Ringfläche 25 abgestützt, die in der Wandung der Ringnut 18 des Stellrings 2 ausgebildet ist. Der Stellring 2 ist am vorderen Ende 2' konisch mit zum Bohrwerkzeug hin gerichteter Verjüngung ausgebildet.

## Patentansprüche

1. Bohrfutter mit zwischen sich eine Aufnahme für das Bohrwerkzeug bildenden Spannbacken (3), mit einem Futterkörper (1), in dem die Spannbacken (3) verteilt um die Drehachse (4) in Führungsbohrungen (5) angeordnet sind, die in zur Drehachse (4) geneigter Richtung verlaufen, so daß die Führungsbohrungen (5) mit ihren Achsen nach vorn, d. h. zum Bohrwerkzeug hin, zusammenlaufen und rückwärts in Öffnungen (6) an der Mantelfläche des Futterkörpers (1) austreten, ferner mit einem zur Drehachse (4) koaxialen, drehbar und axial unverschiebbar am Futterkörper (1) gelagerten Stellring (2), der zum Verstellen der Spannbacken (3) ein mit der Drehachse (4) koaxiales Stellgewinde (7) aufweist, das an jeder Spannbacke (3) mit einer an der Spannbacke (3) vorgesehene Zahnreihe (8) im Eingriff steht, und mit einem am Futterkörper (1) geführten, gegen den Stellring (2) austellbaren Sperrglied, das in seiner am Stellring (2) angreifenden Stellung diesen gegen unerwünschte Verdrehung sichert, dadurch gekennzeichnet, daß das Sperrglied axial vor dem Stellgewinde (7) des Stellrings (2) angeordnet und der Stellring (2) axial nach vorn über das Stellgewinde (7) hinaus verlängert und dort mit einer zum Futterkörper (1) hin offenen Ringnut (18) versehen ist, die das Sperrglied aufnimmt.

2. Bohrfutter nach Anspruch 1, dadurch gekennzeichnet, daß das Sperrglied ein zur Drehachse (4) koaxialer Sperring (17) ist, der am Futterkörper (1) undrehbar und axial verschiebbar geführt und durch die Kraft von Federn (19) in seiner am Stellring (2) angreifenden Stellung gehalten ist.

3. Bohrfutter nach Anspruch 2, dadurch gekennzeichnet, daß der Stellring (2) in der Wandung der Ringnut (18) einerseits und der Sperring (17) andererseits jeweils mit einer Bremsringfläche (20) versehen sind und daß in der am Stellring (2) angreifenden Stellung der Sperring (17) und der Stellring (2) durch die Federn (19) mit den Bremsringflächen (20) aneinander gedrückt sind.

4. Bohrfutter nach Anspruch 3, dadurch gekennzeichnet, daß die Bremsringflächen (20) konisch zur Drehachse (4) ausgebildet sind.

5. Bohrfutter nach Anspruch 2, dadurch gekennzeichnet, daß der Stellring (2) in der Wandung seiner Ringnut (18) mindestens eine Sperrausnehmung aufweist, in die der Sperring (17) in seiner am Stellring (2) angreifenden Stellung mit einem Sperrvorsprung eingreift.

6. Bohrfutter nach Anspruch 5, dadurch gekennzeichnet, daß der Sperrvorsprung und die ihn aufnehmende Sperrausnehmung einander in derart geneigten Flankenflächen anliegen, daß diese beim Verdrehen des Stellrings (2) von Hand den Sperrvorsprung gegen die Kraft der Federn (19) aus der Sperrausnehmung herausdrücken, im übrigen aber den Stellring (2) gegen Verdrehen blockieren.

7. Bohrfutter nach einem der Ansprüche 5 oder 6, dadurch gekennzeichnet, daß mehrere Sperrvorsprünge und Sperrausnehmungen vorgesehen und gleichmäßig verteilt über den Futterumfang nach Art von Zahnkränzen (21) angeordnet sind.

8. Bohrfutter nach einem der Ansprüche 2 bis 7, dadurch gekennzeichnet, daß der Sperring (17) an seiner dem Stellring (2) zugekehrten radialen Außenfläche eine in Umfangsrichtung verlaufende Ringnut (26) aufweist, in die ein Stellstift (27) in Nutlängsrichtung verschieblich eingreift, der in axialer Richtung des Bohrfutters verstellbar in der Wand des Stellrings (2) geführt ist und nach außen aus dem Stellring (2) vorsteht.

9. Bohrfutter nach Anspruch 8, dadurch gekennzeichnet, daß der Stellstift (27) gegen Verstellung in seiner eigenen Axialrichtung im Sperring (17) oder Stellring (2) gesichert ist.

10. Bohrfutter nach Anspruch 8 oder 9, dadurch gekennzeichnet, daß in der Wand des Stellrings (2) ein Durchbruch (28) vorgesehen ist, in dem der Stellstift (27) in Umfangsrichtung begrenzt zwischen zwei Endstellungen (29, 30) verschiebbar ist, wobei der Sperring (17) in der ersten Endstellung (29) für den Angriff am Stellring (2) freigegeben und in der zweiten Endstellung (30) gesperrt ist.

11. Bohrfutter nach Anspruch 10, dadurch gekennzeichnet, daß der Stellstift (27) in der ersten Endstellung (29) um den zum Lösen des Sperrings (17) vom Stellring (2) erforderlichen Axialhub des Sperrings (17) frei im Durchbruch (28) verschiebbar ist und in der zweiten Endstellung (30) unter der Kraft der Federn (19) in eienr Rastausnehmung (32) in der Randkontur des Durchbruchs (28) sitzt.

12. Bohrfutter nach einem der Ansprüche 2 bis 11, dadurch gekennzeichnet, daß der Sperring (17) eine sich axial erstreckende, zum Futterkörper (1) hin und am rückwärtigen Sperringende offene Axialnut (22) aufweist, in die ein am Futterkörper (1) fester und den Sperring (17) gegen Verdrehen sichernder Bolzenkopf (23) greift.

13. Bohrfutter nach einem der Ansprüche 2 bis 12, dadurch gekennzeichnet, daß der Stellring (2) aus einer Stellhülse (2.2) und einem das Stellgewinde (7) tragenden Gewindering (2.1) besteht, die gegeneinander undrehbar axial zusammengesteckt sind, wobei die Ringnut 18 in der Stellhülse (2.2) zum Gewindering (2.1) hin axial offen ausgebildet ist, so daß der Sperring (17) bei zunächst noch fehlendem Gewindering (2.1) axial in die Ringnut (18) eingelegt werden kann.

14. Bohrfutter nach einem der Ansprüche 2 bis 13, dadurch gekennzeichnet, daß der Sperring (17) am vorderen Ringende offene Sacklöcher (24) aufweist, welche je eine der als Schraubenfedern ausgebildeten Federn (19) aufnehmen, die mit ihrem aus dem Sackloch (24) vorstehenden Federende an einer zur Drehachse (4) senkrecht stehenden Ringfläche (25) in der Wandung der Ringnut (18) des Stellrings (2) abgestützt sind.

15. Bohrfutter nach einem der Ansprüche 1 bis 14, dadurch gekennzeichnet, daß der Stellring (2) zum vorderen Ende hin konisch verjüngt ist.

## Claims

1. A drilling chuck comprising clamping jaws (3) which form between them a receiving means for the drilling tool, a chuck body (1) in which the clamping jaws (3) are arranged distributed around the axis of rotation (4) in guide bores (5) which extend in a direction that is inclined relative to the axis of rotation (4) so that the guide bores (5) converge with their axes in a forward direction, that is to say towards the drilling tool, and open rearwardly at openings (6) at the peripheral surface of the chuck body (1), further comprising an adjusting ring (2) which is coaxial with respect to the axis of rotation (4) and which is rotatably and axially immovably mounted on the chuck body (1) and which for adjustment of the clamping jaws (3) has an adjusting screwthread (7) which is coaxial with the axis of rotation (4) and which is engaged at each clamping jaw (3) with a row of teeth (8) provided on the clamping jaw (3), and a locking member which is guided on the chuck body (1) and which is engageable against the adjusting ring (2) and which in its position of engaging against the adjusting ring (2) prevents undesired rotary movement thereof, characterised in that the locking member is arranged axially in front of the adjusting screwthread (7) of the adjusting ring (2) and the adjusting ring (2) is extended axially forwardly beyond the screwthread (7) and is there provided with an annular groove (18) which is open towards the chuck body (1) and which accommodates the locking member.

2. A drilling chuck according to claim 1 characterised in that the locking member is a locking ring (17) which is coaxial with respect to the axis of rotation (4) and which is non-rotatably and axially movably guided on the chuck body (1) and is held by the force of springs (19) in its position of engaging the adjusting ring (2).

3. A drilling chuck according to claim 2 characterised in that the adjusting ring (2), in the wall of the annular groove (18), on the one hand, and the locking ring (17) on the other hand are each provided with a respective annular braking surface (20) and in the position of engaging the adjusting ring (2) the locking ring (17) and the adjusting ring (2) are pressed against each other with the annular braking surfaces (20) by the springs (19).

4. A drilling chuck according to claim 3 characterised in that the annular braking surfaces (20) are of a conical configuration relative to the axis of rotation (4).

5. A drilling chuck according to claim 2 characterised in that in the wall of its annular groove (18) the adjusting ring (2) has at least one locking recess into which the locking ring (17) engages with a locking projection when in its position of engaging the adjusting ring (2).

6. A drilling chuck according to claim 5 characterised in that the locking projection and the locking recess accommodating same bear against each other in flank surfaces which are inclined in such a way that when the adjusting ring (2) is turned by hand the flank surfaces urge the locking projection out of the locking recess against the force of the springs (19) but otherwise block the adjusting ring (2) to prevent it from being turned.

7. A drilling chuck according to one of claims 5 and 6 characterised in that there are provided a plurality of locking projections and locking recesses which are arranged uniformly distributed over the periphery of the chuck in the manner of annular tooth configurations (21).

8. A drilling chuck according to one of claims 2 to 7 characterised in that at its radial outside surface which is towards the adjusting ring (2) the locking ring (17) has a peripherally extending annular groove (26) into which an adjusting pin (27) engages displaceably in the longitudinal direction of the groove, which adjusting pin (27) is guided displaceably in the axial direction of the drilling chuck in the wall of the adjusting ring (2) and projects outwardly from the adjusting ring (2).

9. A drilling chuck according to claim 8 characterised in that the adjusting pin (27) is prevented from moving in its own axial direction in the locking ring (17) or the adjusting ring (2).

10. A drilling chuck according to claim 8 or claim 9 characterised in that provided in the wall of the adjusting ring (2) is an aperture (28) in which the adjusting pin (27) is displaceable limitedly in the peripheral direction between two limit positions (29, 30), wherein in the first limit position (29) the locking ring (17) is released for engagement with the adjusting ring (2) and is locked in the second limit positon (30).

11. A drilling chuck according to claim 10 characterised in that in the first limit position (29) the adjusting pin (27) is freely displaceable in the aperture (28) by the axial stroke movement of the locking ring (17) which is required to release the locking ring (17) from the adjusting ring (2) and in the second limit position (30) it is disposed under the force of the springs (19) in a retaining recess (32) in the edge contour of the aperture (28).

12. A drilling chuck according to one of claims 2 to 11 characterised in that the locking ring (17) has an axially extending axial groove (22) which is open towards the chuck body (1) and at the rearward end of the locking ring and into which engages a pin head (23) which is fixed to the chuck body (1) and which prevents the locking ring (17) from turning.

13. A drilling chuck according to one of claims 2 to 12 characterised in that the adjusting ring (2) comprises an adjusting sleeve (2.2) and a screwthreaded ring (2.1) carrying the adjusting screwthread (7), the adjusting sleeve and the screwthreaded ring being mutually non-rotatably axially fitted together, wherein the annular groove (18) is formed in the adjusting sleeve (2.2) open axially towards the screwthreaded ring (2.1) so that when the screwthreaded ring (2.1) is initially still absent the locking ring (17) can be axially inserted into the annular groove (18).

14. A drilling chuck according to one of claims 2 to 13 characterised in that the locking ring (17) has blind holes (24) which are open at the front end and each accommodate a respective one of the springs (19) which are in the form of coil springs and which are supported with their end that projects out of the blind hole (24) against an annular surface (25) in the wall of the annular groove (18) of the adjusting ring (2), said annular surface being perpendicular to the axis of rotation (4).

15. A drilling chuck according to one of claims 1 to 14 characterised in that the adjusting ring (2) is conically tapered towards the front end.

## Revendications

1. Mandrin de perceuse comportant des mâchoires de serrage (3), qui forment un évidement pour le foret, un corps de mandrin (1), dans lequel les mâchoires de serrage (3) sont disposées en étant réparties autour de l'axe de rotation (4) dans des perçages de guidage (5) qui s'étendent dans une direction inclinée par rapport à l'axe de rotation (4), de sorte que les axes des perçages de guidage (5) convergent vers l'avant, c'est-à-dire en direction du foret, et que ces perçages débouchent, sur le côté arriére, au niveau d'ouvertures (6) ménagées dans la surface enveloppe du corps (1) du mandrin, et comportant en outre une bague de réglage (2) qui est coaxiale à l'axe de rotation (4), est montée sur le corps (1) du mandrin de manière à pouvoir tourner, sans aucune possibilité de déplacement axial et possède, pour le réglage des mâchoires de serrage (3), un filetage de réglage (7) qui est coaxial à l'axe de rotation (4) et qui engrène, au niveau de chaque mâchoire de serrage (3), avec une série de dents (8) prévue sur la mâchoire de serrage (3), et comportant un organe de blocage, qui est guidé sur le corps (1) du mandrin, peut être serré contre la bague de réglage (2) et, dans sa position dans laquelle il est appliqué contre la bague de réglage (2), bloque cette dernière contre toute rotation indésirable, caractérisé en ce que l'organe de blocage est disposé axialement en avant du filetage de réglage (7) de la bague de réglage (2) et que la bague de réglage (2) se prolonge axialement vers l'avant au-delà du filetage de réglage (7) et comporte, en cet endroit, une gorge annulaire (18), qui s'ouvre en direction du corps (1) du mandrin et loge l'organe de blocage.

2. Mandrin de perceuse selon la revendication 1, caractérisé en ce que l'organe de blocage est une bague de blocage (17), qui est coaxiale à l'axe de rotation (4), est guidée sur le corps (1) du mandrin sans possibilité de rotation et avec possibilité de déplacement axial et est maintenue par la force de ressorts (19) dans sa position appliquée contre la bague de réglage (2).

3. Mandrin de perceuse selon la revendication 2, caractérisé en ce que la bague de réglage (2) située dans la paroi de la gorge annulaire (18) d'une part et la bague de blocage (17) d'autre part comportent chacune une surface annulaire de freinage (20) et que lorsque la bague de blocage (17) est dans sa position appliquée contre la bague de réglage (2), cette bague et la bague de réglage (2) sont repoussées l'une contre l'autre, au moyen des surfaces annulaires de freinage (20), sous l'effet des ressorts (19).

4. Mandrin de perceuse selon la revendication 3, caractérisé en ce que les surfaces annulaires de freinage (20) ont une forme conique rapportée à l'axe de rotation (4).

5. Mandrin de perceuse selon la revendication 2, caractérisé en ce que la bague de réglage (2) possède, dans la paroi de sa gorge annulaire (18), au moins un évidement de blocage, dans lequel la bague de blocage (17) engrène avec un appendice saillant de blocage, lorsque cette bague est dans sa position appliquée contre la bague de réglage (2).

6. Mandrin de perceuse selon la revendication 5, caractérisé en ce que l'appendice saillant de blocage et l'évidement qui loge cet appendice saillant, s'appliquent l'un contre l'autre au niveau de surfaces de flanc inclinées, de telle sorte que lorsqu'on fait tourner à la main la bague de réglage (2), ces surfaces repoussent l'appendice saillant de blocage à l'encontre de la force des ressorts (19), hors de l'évidement de blocage, mais bloquent par ailleurs la bague de réglage (2) contre toute rotation.

7. Mandrin de perceuse selon l'une des revendications 5 ou 6, caractérisé en ce que plusieurs appendices saillants de blocage et plusieurs évidements de blocage sont prévus et sont disposés en étant répartis uniformément sur le pourtour du mandrin, à la manière de couronnes dentées (21).

8. Mandrin de perceuse selon l'une des revendications 2 à 7, caractérisé en ce que la bague de blocage (17) possède, sur sa surface extérieure radiale tournée vers la bague de réglage (2), une bague annulaire (26) qui s'étend dans la direction circonférentielle et dans laquelle s'engage, de manière à y être mobile dans la direction longitudinale de la gorge, une tige de réglage (27), qui est guidée, de manière à pouvoir se déplacer dans la direction axiale du mandrin de perceuse, dans la paroi de la bague de réglage (2) et fait saillie vers l'extérieur hors de la bague de réglage (2).

9. Mandrin de perceuse selon la revendication 8, caractérisé en ce que la tige de réglage (27) est bloquée contre tout déplacement dans sa direction axiale propre dans la bague de blocage (17) ou dans la bague de réglage (2).

10. Mandrin de perceuse selon la revendication 8 ou 9, caractérisé en ce que dans la paroi de la bague de réglage (2) est prévu un passage (28), dans lequel la tige de réglage (27) peut se déplacer d'une manière limitée dans la direction circonférentielle, entre deux positions d'extrémité (22,30), la bague de blocage (17) étant libérée, dans la première position d'extrémité (22), pour son application contre la bague de réglage (2) et étant bloquée dans la seconde position d'extrémité (30).

11. Mandrin de perceuse selon la revendication 10, caractérisé en ce que dans la première position d'extrémité (22), la tige de réglage (27) est déplaçable librement dans le passage, sur une distance égale à la course axiale de la bague de blocage (17), qui est nécessaire pour dégager la bague de blocage (17) de la bague de réglage (2), et, dans la seconde position d'extrémité (3), est en appui, sous l'action de la force des ressorts (19), dans un évidement d'encliquetage (32) ménagé dans le contour marginal du passage (28).

12. Mandrin de perceuse selon l'une des revendications 2 à 11, caractérisé en ce que la bague de blocage (17) possède une rainure axiale (22), qui s'ouvre en direction du corps (1) du mandrin et au niveau de l'extrémité arrière de la bague de blocage et dans laquelle s'engage une tête de boulon (23) qui est montée fixe sur le corps (1) du mandrin et empêche toute rotation de la bague de blocage (17).

13. Mandrin de perceuse selon l'une des revendications 2 à 12, caractérisé en ce que la bague de réglage (2) est constituée par une douille de réglage (2.2) et par une bague filetée (2.1) qui porte le filetage de réglage (7), la douille et la bague pouvant être enfichées axialement sans possibilité de rotation réciproque, la gorge annulaire (18) menagée dans la douille de réglage (2.2) étant agencée de manière à s'ouvrir axialement en direction de la bague filetée (2.1), de sorte que, lorsque la bague filetée (2.1) est tout d'abord encore absente, la bague de blocage (17) peut être insérée axialement dans la gorge annulaire (18).

14. Mandrin de perceuse selon l'une des revendications 2 à 13, caractérisé en ce que la bague de blocage (17) possède des trous borgnes (24) qui s'ouvrent dans son extrémité avant et qui logent chacun l'un des ressorts (19) réalisés sous la forme de ressorts hélicoïdaux, qui prennent appui, par leur extrémité qui fait saillie hors du trou borgne (24), contre une surface annulaire (25), qui est perpendiculaire à l'axe de rotation (4) et est ménagée dans la paroi de la gorge annulaire (18) de la bague de réglage (2).

15. Mandrin de perceuse selon l'une des revendications 1 à 14, caractérisé en ce que la bague de réglage (2) se rétrécit avec une forme conique en direction de l'extrémité avant.
